# EUROPEAN PATENT APPLICATION

(11) **EP 4 650 118 A1**
(43) Date of publication of application: **19.11.2025**
(21) Application number: 24176499.2
(22) Date of filing: 17.05.2024
(51) Int. Cl.: B25J 9/16, B62D 65/02

(54) **METHOD FOR ATTACHING A BOLT TO A BODY OF A VEHICLE**

(71) Applicant: Bayerische Motoren Werke Aktiengesellschaft, 80809 München (DE)
(72) Inventor: Park, Chulhun, Greer, 29651 (US); Akanro, Oluwadamilare, Duncan, 29334 (US); Cantrell, Kenneth, Inman, 29349 (US); Howe, Elle Catherine, 80804 München (DE); Scott, Eugene, Simpsonville, 29681 (US); Tew, David, Boiling Springs, 29316 (US)

(57) **Abstract**

The invention relates to a method for attaching a bolt (2) to a body (1) of a vehicle, wherein the bolt (2) is moved in relation to the body (1) to an attachment point of the body (1) by a fastening device (3). The fastening device (3) comprises a robot (4) supported on a ground (5), a tool (8) attached to the robot (4), a first camera (9) attached to the robot (4), and a second camera (10) supported on the ground (5) independently of the robot (4). The bolt (2) is held on the tool (8). At least one first image of at least an area (A) of the body (1) is captured by the first camera (9), the area (A) comprising the attachment point. At least one second image (I1) of at least one point (P1) of the tool (8) is captured by the second camera (10).

## Description

The invention relates to a method for attaching at least one bolt to a body of a vehicle.

US 11 282 013 B2 shows a system comprising multiple mobile vehicles configured to move autonomously in a smart factory environment in which a workpiece is processed. JP 4745729 B2 shows a friction stir welding apparatus. CN 108858183 B shows a robot and a machining method of a workpiece.

It is an object of the present invention to provide a method by which at least one bolt can be attached to a body of a vehicle in a particularly precise and time- and cost-effective way.

This object is solved by a method having the features of patent claim 1. Advantageous embodiments with expedient developments of the invention are indicated in the other patent claims.

The present invention relates to a method for attaching at least one bolt to a body of a vehicle. The bolt is also referred to as a stud. For example, the vehicle is a passenger vehicle. Preferably, the body is a body-in-white of the vehicle. For example, the method according to the present invention is carried out in a method for manufacturing the vehicle.

In the method according to the present invention, the bolt is moved in relation to the body to an attachment point of the body by a fastening device. Moreover, in the method according to the present invention, the bolt is attached to the body at the attachment point. In the method according to the present invention, the fastening device comprises a robot which is supported on the ground. The fastening device also comprises a tool which is attached to the robot. Thus, the tool can be moved by the robot in relation to the ground. Moreover, for example, the body can be supported on the ground, in particular independently of the robot. This means that, for example, the body can be supported on the ground without involving the robot. In other words, the body can be supported on the ground, bypassing the robot such that the body is not supported on the ground via the robot. Thus, the tool can be moved by the robot in relation to the ground and in relation to the body. Preferably, in the method according to the present invention, the body is stationary with respect to the ground.

The fastening device also comprises a first camera which is attached to the robot. Thus, the first camera can be moved by the robot in relation to the ground and in relation to the body. Thus, when the tool is moved in relation to the ground and in relation to the body by the robot, the first camera is moved by the robot together with the tool in relation to the ground and in relation to the body. Preferably, the first camera and the tool are held on or attached to the robot in such a way that relative movements between the tool and the first camera are avoided.

The fastening device also comprises a second camera which is supported on the ground independently of the robot. This means that the second camera is supported on the ground without involving the robot. In other words, the second camera is supported on the ground, bypassing the robot. This means that the second camera is not supported on the ground via the robot. Thus, the tool and the first camera can be moved by the robot in relation to the ground, in relation to the body and in relation to the second camera.

In the method according to the present invention, the bolt is held on the tool such that the bolt is held on the robot via the tool. Thus, when moving the tool by the robot in relation to the ground, in relation to the body and in relation to the second camera, the bolt is moved by the robot in relation to the ground, in relation to the second camera and in relation to the body.

In the method according to the present invention, at least one first image of at least an area of the body is captured by the first camera, the area comprising the attachment point. Furthermore, in the method according to the present invention, at least one second image of at least one point of the tool is captured by the second camera. For example, the at least one second image is or comprises an image of a base of the bolt. In the method according to the present invention, first position data characterizing at least one first position of the attachment point is determined in dependency on the first image by the electronic computing device. Moreover, in the method according to the present invention, second position data characterizing at least one second position of the tool is determined in dependency on the second image by an electronic computing device.

In the method according to the present invention, the robot is controlled by the electronic computing device on the basis of the first and second position data as a result of which the tool, the first camera held on the robot and the bolt held on the tool are moved by the robot in relation to the body, the ground and the second camera in such a way that the bolt is moved to the attachment point. Thus, the bolt is moved by the robot to the attachment point on the basis of the first and second position data. Thereby, a fast and thus time- and cost-effective and precise movement of the bolt to the attachment point can be affected by the robot. Particularly, by the method according to the present invention, the bolt can be moved to the attachment point by the robot without involving a person such that the bolt can be moved to the attachment point by the robot automatically. Thus, the bolt can be attached to the body in a particularly cost- and time-effective and precise way.

One realization on which the invention is based is that conventional methods for attaching bolts such as T-studs are carried out by persons or by a robot without any compensating device. Such a conventional method comprises a mechanical setting process which has no adjustments to body variations and may cause damage to the body if the bolt is pushed too hard against the body. Moreover, in such a conventional method, it is not possible to control a final position of the bolt individually. Moreover, conventionally, when the tool is replaced with a new one, it is not possible to compensate tool variations. The above-mentioned problems may be solved by the invention.

For example, the tool is a gun which is also referred to as a stud gun or a bolt gun. By the first camera mounted on the robot, variations of the body may be compensated thereby eliminating mechanical stoppers which are used in conventional methods. In the method according to the present invention, variations of the tool may be compensated by the second camera mounted on the ground which is also referred to as a floor. Particularly, variations of the tool may be compensated by the second camera over time. Thus, a production process may continue without verifying a final position of the bolt even if the tool is replaced with a new one. In the method according to the present invention, for example, user offset capabilities may be available to adjust individual bolt positions on the fly, i.e. without stopping a production process.

In an advantageous embodiment of the invention, the point of the tool is a center of a receptacle in which, for holding the bolt on the tool, the bolt is at least partially arranged. For example, the receptacle is circular. Thus, the bolt can be moved by the robot to the attachment position in a particular precise way.

In a further advantageous embodiment of the invention, both the first position data and the second position data are referred to a common base such that tool variations and body variations may be compensated particularly advantageously. Thus, the bolt can be attached in a particularly time- and cost-effective way.

In a further advantageous embodiment of the invention, the first position of the tool and the second position of the attachment point are determined in relation to a common coordinate system comprising exactly three axes running perpendicularly to each other in pairs, namely a first axis, a second axis and a third axis. Of the three axes, the first position data only use the first and third axes to characterize the position of the attachment point. Of the three axes, the second position data only use the second and third axes to characterize the position of the tool. Thus, the bolt can be moved by the robot in a particularly precise way such that the bolt can be installed in a particular cost- and time-effective way. For example, the common base may be or comprise the common coordinate system.

In a further advantageous embodiment of the invention, the bolt is attached to the body at the attachment point by welding such that the bolt can be attached in a particular time- and cost-effective way.

In order to attach the bolt to the body particularly cost- and time-effective, in a further embodiment of the invention, the welding is performed by a welding tool held on the robot. Thus, the robot can move the welding tool in relation to the ground, the second camera and the body.

Moreover, in a further embodiment of the invention, the bolt is a T-stud.

In the method, relative movements between the body and the ground might occur, in particular whilst capturing the at least one first image. Such relative movements can be compensated by the method, in particular by the first camera by capturing the first image. Moreover, in the method, relative movements between the bolt and the tool might occur, in particular whilst the bolt is held on the tool and/or whilst the second image is captured. Such relative movements can be compensated by the method, in particular by the second camera by capturing the second image.

Further details of the invention will be adherent from the following description of a preferred embodiment and the accompanying drawings. The drawings show in:
- Fig. 1: part of the schematic and perspective side view of a body of a vehicle being a passenger vehicle;
- Fig. 2: part of a schematic side view of a tool for moving a bolt to an attachment point of the body;
- Fig. 3: a further schematic side view of the tool;
- Fig. 4: part of a schematic and perspective view of a robot for moving the tool and thus the bolt in relation to the body; and
- Fig. 5: a schematic representation of an image of the tool, wherein the image is captured by camera.

In the figures the same elements or elements having the same function are indicated by the same reference signs.

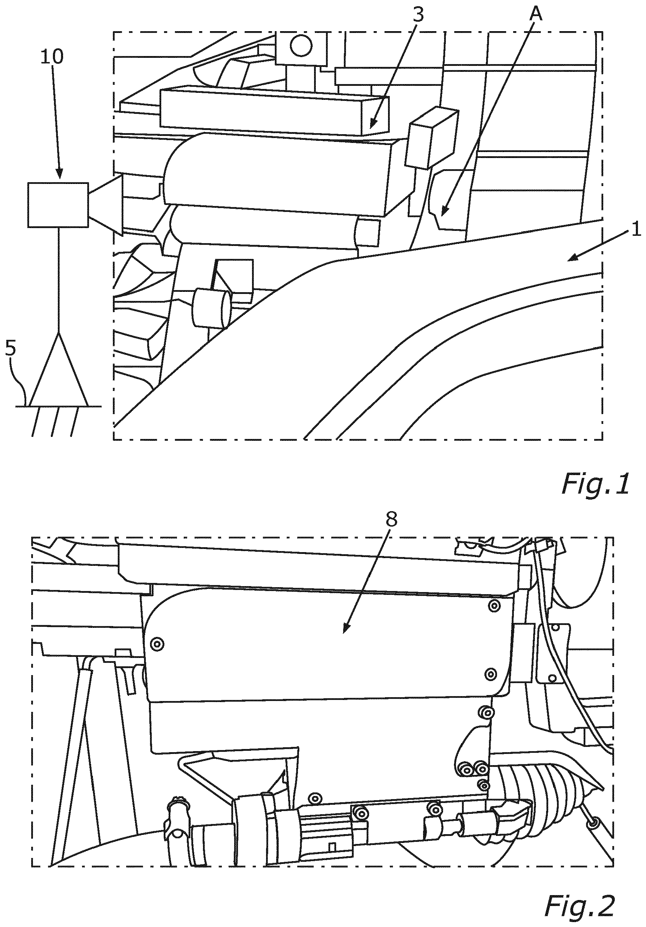

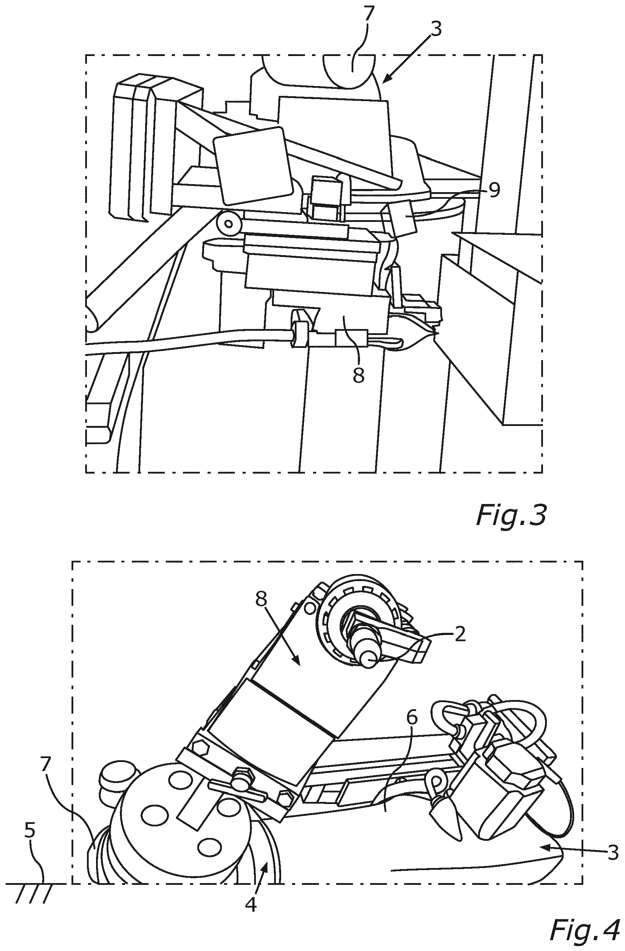

Fig. 1 shows, in a schematic and perspective side view, part of a body 1 of a vehicle being a passenger vehicle. In the embodiment shown in the figures, the body 1 is a body-in-white. In the following, a method for attaching at least one bolt 2 (Fig. 4) to the body 1 of the vehicle will be described on the basis of Figs. 1 to 5. In the method, the bolt 2 is moved in relation to the body 1 to an attachment point of the body 1 by a fastening device 3. In the method, the bolt 2 is attached to the body 1 at the attachment point. As can been seen from Figs. 1 to 4, the fastening device 3 comprises a robot 4 which is supported on a ground 5 which is particularly schematically shown in Fig. 4. The robot 4 comprises robot arms which are also referred to as arms. A first one of the robot arms is mounted on the ground 5 in particular in such a way that relative movements between the first robot arm and the ground 5 are avoided. Thus, the robot 4 is supported on the ground 5 via the first robot arm. The ground 5 is also referred to as a floor. The robot arms of the robot 4 are connected with each other in such a way that, for example, the robot arms of the robot 4 can be moved in relation to each other in pairs. Thus, for example, a second one of the robot arms is movably connected with the first robot arm, wherein the second robot arm is designated with 6. A third one of said robot arms is movably connected with the second robot arm 6 and designated with 7. In this regard, the third robot arm 7 is connected with the first robot arm via the second robot arm 6. The robot arm 7 can be moved in relation to the robot arm 6 and in relation to the first robot arm, and the robot arm 6 can be moved in relation to the third robot arm 7 and in relation to the first robot arm. Thus, the second robot arm 6 and the third robot arm 7 can be moved in relation to the ground 5 and in relation to the body 1. Preferably, the body 1 is supported on the ground 5 independently of the robot 4. Preferably, in the method, the body 1 is stationary with respect to the ground 5.

The fastening device 3 further comprises a tool 8 which is attached to the robot 4. In the embodiment shown in the figures, the tool 8 is attached to the robot arm 7 such that the tool 8 is connected with the robot arm 6 via the robot arm 7. Preferably, the tool 8 is attached to the robot arm 7 in such a way that relative movements between the tool 8 and the robot arm 7 are avoided. Thus, by moving the robot arms 6 and 7 in relation to the ground 5 and the body 1, the tool 8 and thus the bolt 2 held on the tool 8 can be moved in relation to the ground 5 and the body 1. As can be seen from Fig. 4, the bolt 2 is held on the tool 8 such that the robot 4 may move the bolt 2 in relation to the ground 5 and the body 1 by moving the robot arm 6 and/or the robot arm 7 in relation to the ground 5 and in relation to the body 1.

The fastening device 3 further comprises a first camera 9 which is attached to the robot 4, in particular to the tool 8. Preferably, the camera 9 is attached to the robot 4, in particular to the tool 8, in such a way that relative movements between the tool 8 and the camera 9 and between the camera 9 and the bolt 2 held on the tool 8 are avoided. Preferably, the bolt 2 is held on the tool 8 in such a way that relative movements between the tool 8 and the bolt 2 are avoided.

Furthermore, the fastening device 3 comprises a second camera 10 which is shown in Fig. 1 particularly schematically. As can be seen from Fig. 1, the second camera 10 is supported on the ground 5 independently of the robot 4. Thus, the robot arms 6 and 7, the tool 8 and the bolt 2 can be moved in relation to the ground 5, the body 1 and the camera 10. Preferably, the camera 10 is supported on the ground 5 in such a way that relative movements between the camera 10 and the ground 5 are avoided. Preferably, the body 1 is supported on the ground 5 independently of the robot 4. Preferably, the body 1 is supported on the ground 5 in such a way that relative movements between the ground 5 and the body 1 are avoided.

The tool 8 is shown in Fig. 2 in a schematic side view.

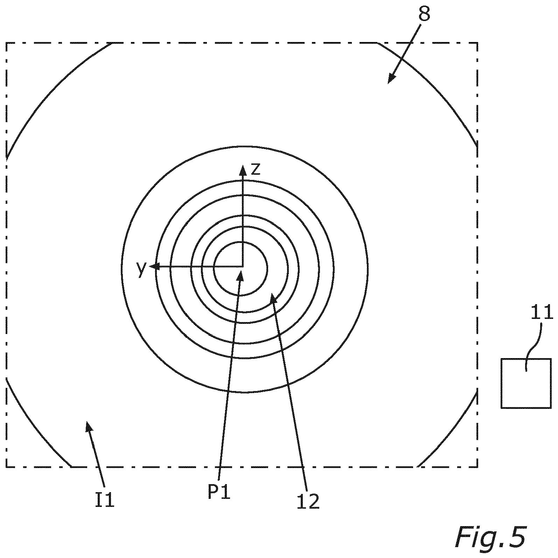

In the method, at least one first image of at least an area A of the body 1 is captured by the first camera 9. The area A comprises the attachment point at which the bolt 2 is to be attached to the body 1. In the method, at least one second image of at least one point P1 of the tool 8 is captured by the second camera 10. Said second image is represented schematically in Fig. 5 and designated by 11.

In the method, first position data are determined by the electronic computing device 11 in dependency on the first image. The first position data characterize at least one first position of the attachment point. Preferably, the first position data characterize the first position of the attachment point in relation to a base and thus in relation to said coordinate system. In the method, second position data are determined in dependency on the second image I1 by an electronic computing device 11, the second position data characterizing at least one second position of the point P1 and thus the tool 8, in particular in relation to the base which comprises, for example, a coordinate system. Thus, for example, the second position data characterize the second position of the tool 8 in relation to said coordinate system, and, for example, the first position data characterize the first position in relation to the coordinate system. Thus, for example, the base is a common base or a mutual base in relation to which both the first and second positions are characterized by the first and second position data. Moreover, for example, the coordinate system of the base is a common coordinate system or a mutual coordinate system in relation to which both the first and second positions are characterized by the first and second position data

In the method, the robot 4 is controlled by the electronic computing device 11 on the basis of the first and second position data as a result of which the tool 8, the first camera 9 held on the robot 4 and the bolt 2 held on the tool 8 are moved by the robot 4 in relation to the body 1, the ground 5 and the second camera 10 in such a way that the bolt 2 is moved to the attachment point.

As can be seen from Fig. 5, the point P1 of the tool 8 is a center of a receptacle 12 in which, for holding the bolt 2 on the tool 8, the bolt 2 is at least partially arranged. Since, in the embodiment shown in the figures, both the first and second positions are characterized by the first and second position data in relation to the common base, in particular in relation to the common coordinate system, both the first position data and the second position data and thus the first and second positions are referred to said common base, in particular to said common coordinate system. Moreover, preferably, said coordinate system comprises exactly three axes, namely a first axis, a second axis and a third axis. The three axes run perpendicularly to each other in pairs. The first axis is also referred to as x, the second axis is also referred to as y, and the third axis is also referred to as z.

As can be seen from Fig. 5, preferably, of the three axes, the first position data only use the first axis x and the third axis z to characterize the first position of the attachment point. Moreover, preferably, of the three axes, the second position data only use the second axis y and the third axis z to characterize the second position of the point P1 and thus the tool 8.

Moreover, preferably, Thus, for example, the first camera 9 is used to control the robot 4 and thus the tool 8 along the second and third axes y and z. Thus, for example, the second camera 10 is used to control the robot 4 and thus the tool 8 along the first and third axes x and z. Thus, the bolt 2 can be moved to the attachment point particularly cost- and time-effectively and particularly precisely. Thereby, the bolt 2 can be installed in particularly in a time- and cost-effective way.

In the method, the bolt 2 is attached to the body 1 at the attachment point by welding. Thus, for example, the fastening device 3 comprises a welding tool held on the robot 4, in particular on the robot arm 7, wherein the welding is performed by said welding tool. Moreover, preferably, the bolt 2 is a T stud.

### Reference signs

- 1: body
- 2: bolt
- 3: fastening device
- 4: robot
- 5: ground
- 6: second robot arm
- 7: third robot arm
- 8: tool
- 9: first camera
- 10: second camera
- 11: electronic computing device
- 12: receptacle
- A: area
- I1: first image
- P1: point
- x: first axis
- y: second axis
- z: third axis

## Claims

1. A method for attaching at least one bolt (2) to a body (1) of a vehicle, wherein:
- the bolt (2) is moved in relation to the body (1) to an attachment point of the body (1) by a fastening device (3);
- the bolt (2) is attached to the body (1) at the attachment point;
- the fastening device (3) comprises a robot (4) supported on a ground (5), a tool (8) attached to the robot (4), a first camera (9) attached to the robot (4), and a second camera (10) supported on the ground (5) independently of the robot (4);
- the bolt (2) is held on the tool (8);
- at least one first image of at least an area (A) of the body (1) is captured by the first camera (9), the area (A) comprising the attachment point;
- at least one second image (I1) of at least one point (P1) of the tool (8) is captured by the second camera (10);
- first position data characterizing at least one first position of the attachment point is determined in dependency on the first image by the electronic computing device (11);
- second position data characterizing at least one second position of the tool (8) is determined in dependency on the second image (I1) by an electronic computing device (11); and
- the robot (4), by the electronic computing device (11), is controlled on the basis of the first and second position data as a result of which the tool (8), the first camera (9) held on the robot (4) and the bolt (2) held on the tool (8) are moved by the robot (4) in relation to the body (1), the ground (5) and the second camera (10) in such a way that the bolt (2) is moved to the attachment point.

2. The method according to claim 1,
wherein the point (P1) of the tool (8) is a center of a receptacle (12) in which, for holding the bolt (2) on the tool (8), the bolt (2) is at least partially arranged.

3. The method according to claim 1 or 2,
wherein both the first position data and the second position data are referred to a common base.

4. The method according to any one of the preceding claims,
wherein:
- the first position of the tool (8) and the second position of the attachment point are determined in relation to a common coordinate system comprising exactly three axes running perpendicularly to each other in pairs, namely a first axis, a second axis (y) and a third axis (z);
- of the three axes, the first position data only use the second and third axes (y, z) to characterize the position of the tool (8); and
- of the three axes, the second position data only use the first and third axes (z) to characterize the position of the attachment point.

5. The method according to any one of the preceding claims,
wherein the bolt (2) is attached to the body (1) at the attachment point by welding.

6. The method according to claim 5,
wherein the welding is performed by a welding tool held on the robot (4).

7. The method according to any one of the preceding claims,
wherein as the bolt (2) a T-stud is used.
